# EUROPÄISCHE PATENTSCHRIFT

(11) **EP 2 407 727 B1**
(45) Veröffentlichungstag und Bekanntmachung des Hinweises auf die Patenterteilung: **19.08.2015**
(21) Anmeldenummer: 11171987.8
(22) Anmeldetag: 29.06.2011
(51) Int. Cl.: F24F 7/08, F24F 3/16, F24F 12/00, F24F 13/14

(54) **Lüftungsgerät**
Ventilation device
Appareil d'aération

(30) Priorität: 15.07.2010 AT 12002010
(43) Veröffentlichungstag der Anmeldung: 18.01.2012
(73) Patentinhaber: Troges Gesellschaft für Trocknungs- und Wärmetechnik m. b. H., 1220 Wien (AT)
(72) Erfinder: Braunegg, Christof, 1190 Wien (AT)
(74) Vertreter: KLIMENT & HENHAPEL

(56) Entgegenhaltungen:
- DE-A1-102005 047 247
- JP-A- 2006 038 449
- KR-B1- 100 848 969
- US-A- 5 286 447
- US-A- 5 913 360
- US-A1- 2003 111 219

## Beschreibung

Die Erfindung betrifft ein Lüftungsgerät gemäß dem Oberbegriff von Anspruch 1, sowie ein Verfahren zur Reinigung und Desinfektion eines Lüftungsgeräts gemäß dem Oberbegriff von Anspruch 5.

Lüftungsgeräte dienen in allgemein bekannter Weise zur Belüftung von Räumlichkeiten in Innenbereichen, um insbesondere eine oder mehrere der folgenden Funktionen auszuführen: Umwälzung, Filtration, Erwärmung, Kühlung, Wärmerückgewinnung, Befeuchtung, Trocknung und Mischung von Luft. Falls das Lüftungsgerät im Außenbereich angeordnet ist, etwa auf einem Gebäudedach, wird Außenluft direkt vom Lüftungsgerät angesaugt, und die Fortluft vom Lüftungsgerät direkt an den Außenbereich abgegeben. Falls das Lüftungsgerät innerhalb einer Gebäudehülle angeordnet ist, wird Außenluft vom Außenbereich über einen Lüftungskanal zum Außenluftanschluss des Lüftungsgerätes angesaugt, und die Fortluft von einem Fortluftanschluss des Lüftungsgerätes über weitere Lüftungskanäle an den Außenbereich abgegeben. Innerhalb des Lüftungsgerätes sind mehrere Komponenten vorgesehen, um die angesaugte Luft aufzubereiten, etwa zu filtern, zu erwärmen, zu kühlen, zu entfeuchten, zu befeuchten, oder Wärme rückzugewinnen, und mithilfe von Ventilatoren zu einem Zuluftanschluss des Lüftungsgerätes fördern, von dem weitere, außerhalb des Lüftungsgerätes liegende Lüftungskanäle zu den zu belüftenden Räumlichkeiten im Innenbereich führen. Die Gruppe jener Komponenten innerhalb des Lüftungsgerätes, die entlang der Strömungsstrecke der angesaugten Luft zwischen dem Außenluftanschluss und dem Zuluftanschluss angeordnet sind, wird im Folgenden als Zulufteinheit des Lüftungsgeräts bezeichnet.

Des Weiteren ist bei Lüftungsgeräten ein Abluftanschluss vorgesehen, der über weitere Lüftungskanäle, die außerhalb des Lüftungsgerätes liegen, mit einer Räumlichkeit eines Innenbereiches verbunden ist, und über den Abluft aus den zu belüftenden Räumlichkeiten abgesaugt wird. Innerhalb des Lüftungsgerätes können wiederum mehrere Komponenten vorgesehen sein, um an der abgesaugten Luft eine oder mehrere der oben genannten Funktionen auszuführen, und sie mithilfe von Ventilatoren zum Fortluftanschluss des Lüftungsgerätes zu fördern. Die Gruppe jener Komponenten innerhalb des Lüftungsgerätes, die entlang der Strömungsstrecke der abgesaugten Luft zwischen dem Abluftanschluss und dem Fortluftanschluss angeordnet sind, wird im Folgenden als Ablufteinheit des Lüftungsgeräts bezeichnet.

In der Zuluft- und Ablufteinheit sind in der Regel Filter vorgesehen, um die angesaugte und die abgesaugte Luft zu filtern. Diese Filter sind in zweckmäßiger Weise austauschbar ausgeführt. Dennoch kommt es mitunter zu einer raschen Verunreinigung des Lüftungsgerätes, insbesondere auch durch organische Stoffe wie Bakterien, Keime, Viren, Sporen und andere Mikroorganismen, die auch durch den Einsatz von Filtern nur unzureichend entfernt werden können. Mithilfe von Desinfektionsmitteln kann das Lüftungsgerät zwar gereinigt werden, eine manuelle Desinfektion ist aber aufwändig, zudem kann eine vollständige Reinigung des Lüftungsgerätes in allen Ecken und Spalten nur schwer erreicht werden. Des Weiteren ist darauf zu achten, dass es bei Normalbetrieb des Lüftungsgerätes zu keinen Belastungen der Zuluft durch Desinfektionsmittel und dergleichen kommt.

JP 2006-38449 offenbart ein Lüftungsgerät nach dem Oberbegriff des Anspruchs 1.

Es ist daher das Ziel der Erfindung, eine Reinigung, insbesondere Desinfektion, eines Lüftungsgerätes zu ermöglichen. Dabei soll die Reinigung auch automatisierbar sein, und Belastungen der Zuluft durch Desinfektionsmittel und dergleichen vermeiden.

Diese Ziele werden durch die Merkmale von Anspruch 1 und 5 erreicht. Anspruch 1 bezieht sich auf ein Lüftungsgerät mit einem geschlossenen Lüftungskasten, der einen Außenluftanschluss mit einer Außenluftklappe, einen Zuluftanschluss mit einer Zuluftklappe, einen Abluftanschluss mit einer Abluftklappe, sowie einen Fortluftanschluss mit einer Fortluftklappe aufweist, wobei innerhalb des Lüftungsgerätes eine Zulufteinheit vorgesehen ist, die entlang der Strömungsstrecke der angesaugten Luft zwischen dem Außenluftanschluss und dem Zuluftanschluss angeordnet ist, sowie eine Ablufteinheit vorgesehen ist, die entlang der Strömungsstrecke der abgesaugten Luft zwischen dem Abluftanschluss und dem Fortluftanschluss angeordnet ist. Erfindungsgemäß ist bei einem solchen Lüftungsgerät vorgesehen, dass innerhalb des Lüftungsgerätes regelbare Umluftklappen vorgesehen sind, die in geöffneter Stellung die Zulufteinheit mit der Ablufteinheit verbinden, und innerhalb des Lüftungsgerätes in der Zuluft- oder Ablufteinheit ein Ozonierungsmodul vorgesehen ist.

Ozonierungsmodule umfassen Strahlungsquellen für kurzwellige UV-Strahlung, die in bestrahlter Luft Sauerstoffradikale, insbesondere Singulett-Sauerstoff, und Ozon erzeugen, und auch als Ozonlampen bezeichnet werden. Die hierfür erforderlichen Wellenlängen der UV-Strahlung bewegen sich in einem Bereich von 100-200 nm, wobei in diesem Bereich auch von VUV-Strahlung gesprochen wird. Das so erzeugte Gasgemisch ist äußerst reaktiv und oxidiert in Abhängigkeit von seiner Konzentration und der Einwirkzeit, die wiederum durch die UV-Leistung der Ozonlampe gegeben ist, bis zu 99,99% aller im Luftstrom und auf den Oberflächen im Lüftungsgerät befindlichen organischen Verunreinigungen. Durch die Verwendung von Ozonlampen kann auf den Einsatz chemischer Desinfektionsmittel verzichtet werden, wobei die gebildeten Sauerstoffradikale und Ozon im Zuge der reinigenden Oxidationsreaktionen und durch natürlichen Zerfall wieder in Sauerstoff umgewandelt werden. Durch Erzeugung eines oxidierenden Gasgemisches kann außerdem eine nahezu vollständige Reinigung und Desinfektion des Lüftungsgerätes auch in seinen schwer zugänglichen Teilen erreicht werden.

Insbesondere ist die Wirkung der gebildeten Sauerstoffradikale und des Ozons auf Fette und andere organische Stoffe, sowie daraus resultierende Gerüche, welche im Luftstrom transportiert werden, interessant. Die hochreaktiven Moleküle bewirken eine Veränderung des molekularen Aufbaus dieser organischen Stoffe, die unangenehme Gerüche beseitigt und auch als "kalte Verbrennung" oder "Kaltoxidation" bezeichnet wird.

Die reinigende und desinfizierende Wirkung könnte zwar auch durch direkte UV-Bestrahlung mit einer Wellenlänge von 200-280 nm, die auch als UVC-Strahlung bezeichnet wird, erzielt werden, allerdings ist UVC-Strahlung in den hier relevanten Dosen nur über eine geringe Entfernung wirksam, und nimmt in ihrer Strahlungsintensität im Verhältnis zum Abstand quadratisch ab. Im Gegensatz dazu entfaltet Ozon seine Wirkung nicht nur im Bereich der Entstehungsquelle, sondern im gesamten Strömungsverlauf bis zu seinem Abbau.

Mithilfe der erfindungsgemäß vorgesehenen Umluftklappen kann des Weiteren ein Reinigungsbetrieb ermöglicht werden, bei dem das oxidierende Gasgemisch innerhalb des Lüftungsgerätes umgewälzt wird. Eine Belastung der Zuluft mit Sauerstoffradikalen und Ozon wird dadurch vermieden. Des Weiteren kann auch ein Spülbetrieb verwirklicht werden, bei dem nach Beendigung der Reinigung das hochreaktive Gasgemisch in den Außenbereich abgeführt wird, um jegliche Gefahr einer Belastung der Zuluft nach Wiederaufnahme des Normalbetriebes zu vermeiden.

Gemäß einer bevorzugten Ausführungsform können in der Zulufteinheit zwei Wärmetauscher vorgesehen sein, wobei das Ozonierungsmodul zwischen den beiden Wärmetauschern angeordnet ist. Wärmetauscher sind übliche Komponenten in Lüftungsgeräten, die bei dieser Ausführung zur Abschirmung der anderen Bauteile des Lüftungsgerätes von den UV-Strahlen des Ozonierungsmoduls eingesetzt werden.

Des Weiteren wird vorgeschlagen, dass das Ozonierungsmodul sowohl eine UVC-Strahlungsquelle, als auch eine VUV-Strahlungsquelle umfasst. UVC-Strahlung hat einerseits entkeimende Wirkung, fördert aber andererseits auch den Abbau von Ozon. Eine UVC-Strahlungsquelle kann somit eingesetzt werden, um die Ozonkonzentration zu begrenzen, oder rascher zu verringern.

Des Weiteren ist es zweckmäßig, außerhalb des Lüftungskastens eine Warnleuchte anzuordnen, die bei Betrieb der Ozonlampe eingeschaltet ist. Diese Warnleuchte signalisiert dem Wartungspersonal somit den Reinigungsbetrieb, bei dem die Wartungstüren des Lüftungsgerätes nicht geöffnet werden sollten. Um jegliche Gefährdung auszuschließen, kann des Weiteren vorgesehen sein, dass der Lüftungskasten Wartungstüren aufweist, die mit Schaltern versehen sind, wobei die Schalter bei Betrieb des Ozonierungsmoduls und Öffnen der Wartungstüren das Ozonierungsmodul ausschalten. Dadurch wird bei einem ordnungsgemäßen Betrieb auch bei einem irrtümlichen Öffnen der Wartungstüren während des Reinigungsbetriebes eine Gesundheitsgefährdung des Wartungspersonals ausgeschlossen.

Die Erfindung bezieht sich des Weiteren auf ein Verfahren zur Reinigung und Desinfektion eines Lüftungsgeräts, bei dem im Normalbetrieb mithilfe einer Zulufteinheit des Lüftungsgerätes ein Luftstrom von einer Außenluftklappe eines Außenluftanschlusses einer Zuluftklappe eines Zuluftanschlusses zugeführt wird, und mithilfe einer Ablufteinheit ein Luftstrom von einer Abluftklappe eines Abluftanschlusses einer Fortluftklappe eines Fortluftanschlusses zugeführt wird. Erfindungsgemäß ist hierbei vorgesehen, dass im Reinigungsbetrieb die Außenluftklappe, die Zuluftklappe, die Abluftklappe und die Fortluftklappe geschlossen werden, und durch Öffnen von, innerhalb des Lüftungsgerätes angeordneten Umluftklappen die Zulufteinehit mit der Ablufteinheit zweiseitig verbunden wird, wobei die Reinigung und Desinfektion der, auf diese Weise innerhalb des Lüftungsgerätes umgewälzten Luft mithilfe eines Ozonierungsmoduls erfolgt. Das Ozonierungsmodul ist dabei nur im Reinigungsbetrieb eingeschaltet. Durch das zweiseitige Schließen der Zuluft- und Ablufteinheit wird eine in sich geschlossene Umwälzstrecke hergestellt, entlang derer die innerhalb des Lüftungsgerätes befindliche Luft umgewälzt und durch die UV-Quellen des Ozonierungsmoduls zur Erzeugung von Sauerstoffradikalen und Ozon bestrahlt wird. Auf diese Weise findet eine fortlaufende Reinigung und Desinfektion der innerhalb des Lüftungsgerätes befindlichen Luft und Oberflächen statt, ohne dass es zu Belastungen durch das hochreaktive Reinigungs- bzw. Desinfektionsgas außerhalb des Lüftungsgerätes kommt.

Des Weiteren wird ein Spülbetrieb vorgeschlagen, bei dem bei ausgeschalteten UV-Quellen des Ozonierungsmoduls die Außenluftklappe und die Fortluftklappe geöffnet werden, und durch Öffnen einer Umluftklappe die Zulufteinheit mit der Ablufteinheit zur Herstellung eines Spülweges lediglich einseitig geschlossen wird.

Die Erfindung wird im Folgenden anhand eines Ausführungsbeispiels mithilfe der beiliegenden Zeichnungen näher erläutert. Es zeigen hierbei
Die Fig. 1 eine schematische Darstellung einer Ausführung eines Lüftungsgerätes mit den Strömungswegen bei Normalbetrieb,
Fig. 2 das Lüftungsgerät gemäß der Fig. 1 bei Reinigungsbetrieb, und die
Fig. 3 das Lüftungsgerät gemäß der Fig. 1 bei Spülbetrieb.

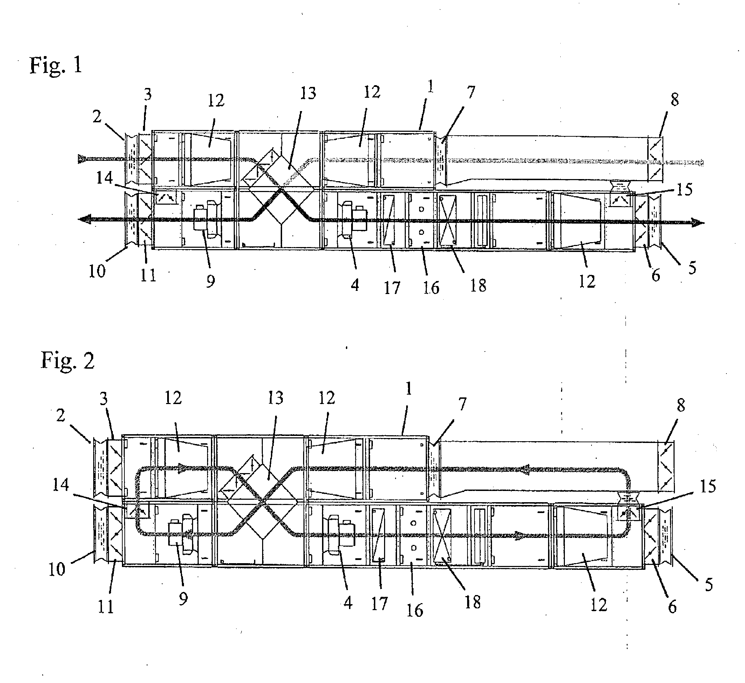

Die für die Erfindung maßgeblichen Komponenten einer Ausführungsform eines Lüftungsgerätes werden zunächst anhand der Fig. 1 erläutert. Das Lüftungsgerät weist hierbei einen geschlossenen Lüftungskasten 1 auf, an dem sich ein Außenluftanschluss 2 mit einer Außenluftklappe 3 befindet, über die mithilfe eines Zuluftventilators 4 Außenluft angesaugt und einem Zuluftanschluss 5 mit einer Zuluftklappe 6 zugeführt wird. Am Zuluftanschluss 6 können weitere Lüftungskanäle (in den Fig. 1-3 nicht ersichtlich) angeschlossen werden, über die die Zuluft den zu belüftenden Räumlichkeiten eines Innenbereiches zugeführt wird. Der Anschluss kann dabei über flexible Anschlussstutzen erfolgen, um Körperschallübertragungen an das angeschlossene Lüftungssystem zu verhindern. Jene Komponenten, die entlang der Strömungsstrecke der angesaugten Luft zwischen dem Außenluftanschluss 2 und dem Zuluftanschluss 5 angeordnet sind, werden in ihrer Gesamtheit hierin als Zulufteinheit bezeichnet. Des Weiteren weist der Lüftungskasten 1 einen Abluftanschluss 7 mit einer Abluftklappe 8 auf, über den Abluft aus den zu belüftenden Räumlichkeiten mithilfe eines Abluftventilators 9 abgesaugt und einem Fortluftanschluss 10 mit einer Fortluftklappe 11 zugeführt wird. Jene Komponenten, die entlang der Strömungsstrecke der abgesaugten Luft zwischen dem Abluftanschluss 7 und dem Fortluftanschluss 10 angeordnet sind, werden in ihrer Gesamtheit hierin als Ablufteinheit bezeichnet. Der Abluftanschluss 7 bzw. die Abluftklappe 8 ist ebenfalls über Lüftungskanäle mit den zu belüftenden Räumlichkeiten verbunden, die in den Fig. 1-3 aber nicht ersichtlich sind. Der Fortluftanschluss 10 ist des Weiteren mit einem Außenbereich verbunden. In der Zuluft- und Ablufteinheit sind in der Regel Filter 12 angeordnet, die austauschbar ausgeführt sind.

Zur Wärmerückgewinnung aus der Abluft wird etwa ein Kreuzstromwärmetauscher 13 eingesetzt, über den die Wärme der Abluft auf die zumeist kältere Außenluft übertragen wird.

In der Fig. 1 sind des Weiteren die erfindungswesentlichen Komponenten ersichtlich, nämlich zwei Umluftklappen 14, 15, sowie das Ozonierungsmodul 16, das eine oder mehrere UV-Quellen enthält, etwa eine UVC- und eine VUV-Strahlungsquelle. Wie bereits erwähnt wurde, werden bei VUV-Bestrahlung von Luft Sauerstoffradikale, insbesondere Singulett-Sauerstoff, und Ozon erzeugt. UVC-Strahlung hat einerseits entkeimende Wirkung, fördert aber andererseits auch den Abbau von Ozon. Eine UVC-Strahlungsquelle kann somit eingesetzt werden, um die Ozonkonzentration zu begrenzen, oder rascher zu verringern. Daher ist etwa vorgesehen, im Ozonierungsmodul 16 sowohl eine VUV-Strahlungsquelle zur Produktion des Ozons, als auch eine UVC-Strahlungsquelle zur Reduktion der Ozonkonzentration zu verwenden. Des Weiteren ist an der Innenwand des Ozonierungsmoduls 16 ein Ozonsensor montiert, und über eine PG-Verschraubung mit einem auf der Außenwand des Lüftungskastens 1 montierten Ozonüberwachungsgerät verbunden.

Eine außenbereichsseitige Umluftklappe 14 ist an jenen Enden der Zuluft- und Ablufteinheit angeordnet, die sich im Bereich der Außenluftklappe 3 und der Fortluftklappe 11 befinden. Eine innenbereichsseitige Umluftklappe 15 ist an jenen Enden der Zuluft- und Ablufteinheit angeordnet, die sich im Bereich der Abluftklappe 8 und der Zuluftklappe 6 befinden. Die genaue Positionierung der Umluftklappen 14, 15 ist nicht wesentlich, sie müssen jedoch in ihrer geöffneten Stellung den Strömungsweg innerhalb der Zuluft- und Ablufteinheit verbinden, also eine Zirkulation der Luft innerhalb des Lüftungsgerätes entlang einer in sich geschlossenen Umwälzstrecke ermöglichen. Das Ozonierungsmodul 16 ist zwischen zwei Wärmetauschern 17, 18 angeordnet, die einerseits der Heizung und/oder Kühlung der Zuluft dienen, in der gezeigten Anordnung allerdings auch die von der Ozonlampe erzeugte UV-Strahlung gegenüber den sonstigen Bauteilen des Lüftungsgerätes abschirmen.

Die Außenluftklappe 3, Zuluftklappe 6, Abluftklappe 8, und die Fortluftklappe 11 sind vorzugsweise als hochdichte Klappen ausgeführt, um Leckagen in das angrenzende Luftleitungssystem während der Reinigungsphase zu minimieren. Für den Zuluftventilator 4 und den Abluftventilator 9 werden vorzugsweise so genannte EC-Ventilatoren, wahlweise auch mit Hygienebeschichtung, verwendet. Diese Ventilatoren zeichnen sich durch Energiesparsamkeit und gute Regelbarkeit auch bei geringen Luftmengen aus. Des Weiteren ist eine Regelung vorgesehen, die die Außenluftklappe 3, Zuluftklappe 6, Abluftklappe 8, Fortluftklappe 11, die Umluftklappen 14, 15, das Ozonierungsmodul 16, sowie den Zuluftventilator 4 und den Abluftventilator 9 ansteuert. Über die Regelung kann vom Betreiber manuell oder automatisch der Normalbetrieb, der Reinigungsbetrieb, oder der Spülbetrieb aktiviert werden.

Wird das Lüftungsgerät in dichter Bauart produziert und mit allseitig hochdichten Klappen versehen, ist während des Reinigungs- und Spülbetriebes weder in der Umgebung des Lüftungsgeräts, etwa in der Lüftungszentrale, noch im gesamten Lüftungsnetz, und somit auch in den an die Lüftungsanlage angeschlossenen Räumen, mit Ozonbelastung zu rechnen.

Zur Erhöhung der Sicherheit wird die Revisionstüre des Ozonierungsmoduls 16 etwa mit einem entsprechenden Warnaufkleber (Warnung vor optischer Strahlung) versehen sein. Die Verschlüsse der Revisionstüre werden zweckmäßiger Weise derart ausgeführt, dass sie lediglich mit Hilfe von Werkzeug, z.B. Gabelschlüssel, zu öffnen sind. Während des Reinigungsbetriebs leuchtet eine rote Warnlampe und signalisiert das Vorhandensein einer hohen Ozonkonzentration im Inneren des Lüftungsgeräts. Im Reinigungs- und Spülbetrieb werden sämtliche Wartungstüren des Lüftungsgeräts sowie die Endkontaktschalter der hochdichten Außenluftklappe 3, Zuluftklappe 6, Abluftklappe 8, und der Fortluftklappe 11 elektrotechnisch überwacht, und führen beim unsachgemäßen Schließen oder Öffnen während dieser Phase zu einem Alarm und einer Notabschaltung, sowie anderer Alarmierungsmaßnahmen und gegebenenfalls zu einer Notausspülung in Form einer raschen Ausblasung der ozonhältigen Luft in die Atmosphäre.

Der Normalbetrieb, also die Belüftung der Räumlichkeiten in einem Innenbereich, kann etwa mithilfe einer Zwangsverriegelung erst aufgenommen werden, wenn die beiden Umluftklappen 14, 15 vollständig geschlossen sind, die Ozonlampen außer Betrieb gesetzt sind und der vorgesehene Spülbetrieb in der erforderlichen Intensität abgelaufen ist. Während des Normalbetriebs der Lüftungsanlage sind die Ozonlampen (UVC und VUV) elektronisch verriegelt. Das Öffnen der Revisionstüren ist dann völlig gefahrlos und ungesichert möglich, insbesondere ist keine elektronische Überwachung während des Normalbetriebes erforderlich.

Die Fig. 1 zeigt die Strömungswege im Normalbetrieb des Lüftungsgerätes. Hierbei sind die Außenluftklappe 3, Zuluftklappe 6, Abluftklappe 8, und die Fortluftklappe 11 geöffnet, die Umluftklappen 14, 15 hingegen geschlossen. Die Strömungswege innerhalb der Zuluft- und Ablufteinheit des Lüftungsgerätes verlaufen somit getrennt voneinander. Zur Wärmerückgewinnung kann etwa ein Kreuzstromwärmetauscher 13 vorgesehen sein, es können aber auch andere Formen der Wärmerückgewinnung eingesetzt werden. Eine Filterung der an- und abgesaugten Luft findet mithilfe der Filter 12 statt.

Wahlweise kann das Lüftungsgerät manuell oder automatisch in den Reinigungsbetrieb geschalten werden, wobei die Außenluftklappe 3, Zuluftklappe 6, Abluftklappe 8, und die Fortluftklappe 11 geschlossen werden, die Umluftklappen 14, 15 hingegen geöffnet. Der Zuluftventilator 4 wird gestoppt, und der Abluftventilator 9 arbeitet mit geringer Luftmenge. Diese Konfiguration ist in der Fig. 2 dargestellt. Die Zuluft- und Ablufteinheit werden somit zweiseitig geschlossen, wodurch eine Zirkulation der Luft innerhalb des Lüftungsgerätes bewirkt wird. Gleichzeitig werden die UV-Quellen des Ozonierungsmoduls 16 in Betrieb gesetzt, die die umgewälzte Luft bestrahlen und mithilfe des Luftsauerstoffs Sauerstoffradikale und Ozon im Strömungsweg erzeugen. Dieses hochreaktive Gasgemisch wird mithilfe der zirkulierenden Luft im gesamten Innenraum des Lüftungsgerätes verteilt, und stellt eine effektive und nahezu vollständige Reinigung und Desinfektion der inneren Bereiche des Lüftungsgerätes sicher.

Sowohl die VUV-Strahlungsquelle zur Produktion des Ozons, als auch die UVC-Strahlungsquelle zur Reduktion der Ozonkonzentration werden von zwei unabhängigen Bedienpaneelen überwacht (in den Fig. 1-3 nicht ersichtlich). Diese signalisieren den Ausfall einzelner Strahlungsquellen, sowie den nahenden Ablauf der Röhrenstandzeiten der Strahlungsquellen.

Das Ozonüberwachungsgerät signalisiert auf einem Display die aktuelle Ozonkonzentration im Innenraum des Lüftungsgerätes. Es schaltet die VUV-Strahlungsquelle bei Erreichen einer gewünschten Konzentration, etwa 20 mg/m³, ab. Im Falle eines Absinkens unter eine gewünschte Mindestkonzentration, etwa 15 mg/m³, wird die VUV-Strahlungsquelle wieder eingeschaltet, sofern sich das Lüftungsgerät im Reinigungsbetrieb befindet. Diese Einschaltfunktion ist jedenfalls zwangsverriegelt.

Der Reinigungs- und der Spülbetrieb sind mit der Langsamlauffunktion des Abluftventilators 9 zwangsgekoppelt. Bei Dysfunktion des Abluftventilators 9, oder bei einem anderen anomalen Betriebszustand, können die UV-Strahlungsquellen mithilfe einer Zwangsverriegelung nicht in Betrieb gesetzt werden, und es wird eine Störmeldung ausgelöst.

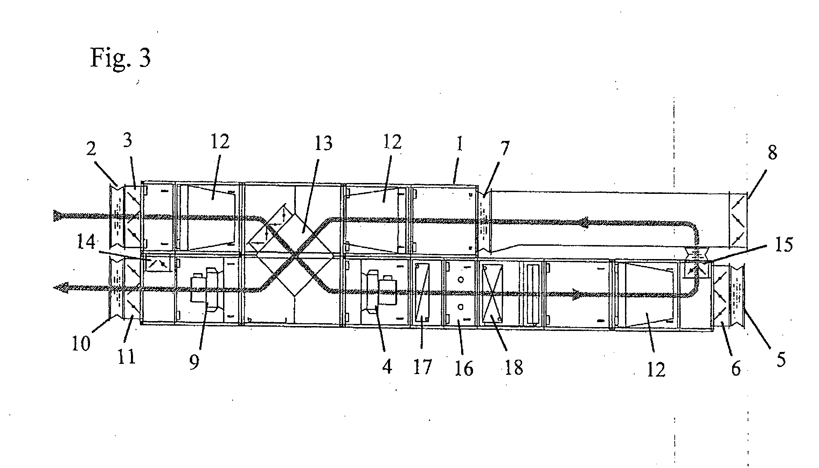

Nach einer vorgegebenen Zeitdauer, die die vollständige Reinigung und Desinfektion des Lüftungsgerätes sicherstellt, kann auf einen Spülbetrieb umgeschaltet werden, indem die Außenluftklappe 3 und die Fortluftklappe 11 geöffnet werden, sowie die außenbereichsseitige Umluftklappe 14 geschlossen wird, und das Ozonierungsmodul 16 ausgeschaltet wird. Diese Konfiguration ist in der Fig. 3 dargestellt. Die Zulufteinheit ist somit mit der Ablufteinheit lediglich einseitig verbunden, nämlich mithilfe der innenbereichsseitigen Umluftklappe 15 an jenen Enden der Zuluft- und Ablufteinheit, die sich im Bereich der Abluftklappe 8 und der Zuluftklappe 6 befinden. Auf diese Weise wird ein Spülweg hergestellt, über den restliches Ozon aus dem Innenbereich des Lüftungsgerätes gespült und in den Außenbereich abgeführt wird.

Nach einer vorgegebenen Zeitdauer, die die vollständige Spülung des Lüftungsgerätes sicherstellt, kann wieder auf den Normalbetrieb umgeschaltet werden, indem die Außenluftklappe 3, Zuluftklappe 6, Abluftklappe 8, und die Fortluftklappe 11 geöffnet, die Umluftklappen 14, 15 hingegen geschlossen werden. Die Strömungswege innerhalb der Zuluft- und Ablufteinheit verlaufen somit wieder getrennt voneinander (siehe Fig. 1). Eine Belastung der Zuluft mit hochreaktiven Gasen enthaltend Sauerstoffradikale und Ozon kann auf diese Weise vermieden werden.

Mithilfe der Erfindung wird somit eine Reinigung, insbesondere Desinfektion, eines Lüftungsgerätes ermöglicht, die insbesondere automatisierbar ist, und Belastungen der Zuluft durch Desinfektionsmittel und dergleichen vermeidet. Die inneren Bereiche des Lüftungsgerätes können dabei nahezu vollständig desinfiziert und entkeimt werden.

## Patentansprüche

1. Lüftungsgerät mit einem geschlossenen Lüftungskasten (1), der einen Außenluftanschluss (2) mit einer Außenluftklappe (3), einen Zuluftanschluss (5) mit einer Zuluftklappe (6), einen Abluftanschluss (7) mit einer Abluftklappe (8), sowie einen Fortluftanschluss (10) mit einer Fortluftklappe (11) aufweist, wobei innerhalb des Lüftungsgerätes eine Zulufteinheit vorgesehen ist, die entlang der Strömungsstrecke der angesaugten Luft zwischen dem Außenluftanschluss (2) und dem Zuluftanschluss (5) angeordnet ist, sowie eine Ablufteinheit vorgesehen ist, die entlang der Strömungsstrecke der abgesaugten Luft zwischen dem Abluftanschluss (7) und dem Fortluftanschluss (10) angeordnet ist, **dadurch gekennzeichnet, dass** innerhalb des Lüftungsgerätes regelbare Umluftklappen (14, 15) vorgesehen sind, die in geöffneter Stellung die Zulufteinheit mit der Ablufteinheit verbinden, und innerhalb des Lüftungsgerätes in der Zuluft- oder Ablufteinheit ein Ozonierungsmodul (16) vorgesehen ist.

2. Lüftungsgerät nach Anspruch 1, **dadurch gekennzeichnet, dass** in der Zulufteinheit zwei Wärmetauscher (17, 18) vorgesehen sind, und das Ozonierungsmodul (16) zwischen den beiden Wärmetauschern (17, 18) angeordnet ist.

3. Lüftungsgerät nach Anspruch 1 oder 2, **dadurch gekennzeichnet, dass** das Ozonierungsmodul (16) sowohl eine UVC-Strahlungsquelle, als auch eine VUV-Strahlungsquelle umfasst.

4. Lüftungsgerät nach einem der Ansprüche 1 bis 3, **dadurch gekennzeichnet, dass** der Lüftungskasten (1) Wartungstüren aufweist, die mit Schaltern versehen sind, wobei die Schalter bei Betrieb des Ozonierungsmoduls (16) und Öffnen der Wartungstüren das Ozonierungsmodul (16) ausschalten.

5. Verfahren zur Reinigung und Desinfektion eines Lüftungsgeräts, bei dem im Normalbetrieb mithilfe einer Zulufteinheit des Lüftungsgerätes ein Luftstrom von einer Außenluftklappe (3) eines Außenluftanschlusses (2) einer Zuluftklappe (6) eines Zuluftanschlusses (5) zugeführt wird, und mithilfe einer Ablufteinheit ein Luftstrom von einer Abluftklappe (8) eines Abluftanschlusses (7) einer Fortluftklappe (11) eines Fortluftanschlüsses (10) zugeführt wird, **dadurch gekennzeichnet, dass** im Reinigungsbetrieb die Außenluftklappe (3), die Zuluftklappe (6), die Abluftklappe (8) und die Fortluftklappe (11) geschlossen werden, und durch Öffnen von, innerhalb des Lüftungsgerätes angeordneten Umluftklappen (14, 15) die Zulufteinheit mit der Ablufteinheit zweiseitig verbunden wird, wobei die Reinigung und Desinfektion der, auf diese Weise innerhalb des Lüftungsgerätes umgewälzten Luft mithilfe eines Ozonierungsmoduls (16) erfolgt.

6. Verfahren nach Anspruch 5, **dadurch gekennzeichnet, dass** ein Spülbetrieb vorgesehen ist, bei dem bei ausgeschaltetem Ozonierungsmodul (16) die Außenluftklappe (2) und die Fortluftklappe (11) geöffnet wird, und durch Öffnen einer Umluftklappe (14) die Zulufteinheit mit der Ablufteinheit zur Herstellung eines Spülweges lediglich einseitig verbunden wird.

## Claims

1. A ventilation device, comprising a closed ventilation box (1) which comprises an external air connection (2) with an external air flap (3), an intake air connection (5) with an intake air flap (6), an exhaust air connection (7) with an exhaust air flap (8), and an outgoing air connection (10) with an outgoing air flap (11), wherein an intake air unit is provided within the ventilation device, which intake air unit is arranged along the flow section of the intake air between the external air connection (2) and the intake air connection (5), and an exhaust air unit is provided which is arranged along the flow section of the extracted air between the exhaust air connection (7) and the outgoing air connection (10), **characterized in that** controllable circulation air flaps (14, 15) are provided within the ventilation device, which circulation air flaps connect the intake air unit to the exhaust air unit in the open position, and an ozonation module (16) is provided within the ventilation device in the intake air or exhaust air unit.

2. A ventilation device according to claim 1, **characterized in that** two heat exchangers (17, 18) are provided in the intake air unit, and the ozonation module (16) is arranged between the two heat exchangers (17, 18).

3. A ventilation device according to claim 1 or 2, **characterized in that** the ozonation module (16) comprises both a UVC radiation source as well as a VUV radiation source.

4. A ventilation device according to one of the claims 1 to 3, **characterized in that** the ventilation box (1) comprises maintenance doors, which are provided with switches, wherein the switches deactivate the ozonation module (16) during operation of the ozonation module (16) and opening of the maintenance doors.

5. A method for cleaning and disinfecting a ventilation device, in which in normal operation an air flow of an external air flap (3) of an external air connection (2) is supplied to an intake air flap (6) of an intake air connection (5) by means of an intake air unit of the ventilation device, and an air flow is supplied from an exhaust air flap (8) of an exhaust air connection (7) to an outgoing air flap (11) of an outgoing air connection (10) by means of an exhaust air unit, **characterized in that** in cleaning operation the external air flap (3), the intake air flap (6), the exhaust air flap (8) and the outgoing air flap (11) are closed, the intake air unit is connected to the exhaust air unit on two sides by opening circulation air flaps (14, 15) arranged within the ventilation device, wherein the cleaning and disinfection of the air circulated in this manner within the ventilation device occurs by means of an ozonation module (16).

6. A method according to claim 5, **characterized in that** a scavenging operation is provided in which the external air flap (2) and the outgoing air flap (11) are opened when the ozonation module (16) is deactivated, and the intake air unit is connected by opening a circulation air flap (14) to the exhaust air unit merely on one side for producing a scavenging path.

## Revendications

1. Appareil de ventilation avec un coffre d'aération fermé (1) possédant un raccord d'air extérieur (2) avec un clapet d'air extérieur (3), un raccord d'air entrant (5) avec un clapet d'air entrant (6), un raccord d'air extrait (7) avec un clapet d'air extrait (8), ainsi qu'un raccord d'air sortant (10) avec un clapet d'air sortant (11), dans lequel il est prévu une unité d'air entrant disposée à l'intérieur de l'appareil de ventilation, qui est disposée le long du trajet d'écoulement de l'air aspiré entre le raccord d'air extérieur (2) et le raccord d'air entrant (5), et il est prévu une unité d'air extrait qui est disposée le long du trajet d'écoulement de l'air aspiré entre le raccord d'air extrait (7) et le raccord d'air sortant (10), **caractérisé en ce que** sont prévus à l'intérieur de l'appareil de ventilation des clapets d'air de circulation réglables (14, 15) qui relient, dans la position ouverte, l'unité d'air entrant à l'unité d'air extrait, et un module d'ozonation (16) est prévu à l'intérieur de l'appareil de ventilation dans l'unité d'air entrant ou l'unité d'air extrait.

2. Appareil de ventilation selon la revendication 1, **caractérisé en ce que** deux échangeurs de chaleur (17, 18) sont prévus dans l'unité d'air entrant et le module d'ozonation (16) est disposé entre les deux échangeurs de chaleur (17, 18).

3. Appareil de ventilation selon la revendication 1 ou 2, **caractérisé en ce que** le module d'ozonation (16) comprend aussi bien une source de rayonnement UVC qu'une source de rayonnement VUV.

4. Appareil de ventilation selon l'une des revendications 1 à 3, **caractérisé en ce que** le coffre d'aération (1) présente des trappes de visite munies d'interrupteurs, lesquels interrupteurs arrêtent le module d'ozonation (16) quand les trappes de visite sont ouvertes alors que le module d'ozonation (16) fonctionne.

5. Procédé pour le nettoyage et la désinfection d'un appareil de ventilation dans lequel, en fonctionnement normal, une unité d'air entrant de l'appareil de ventilation amène un flux d'air d'un clapet d'air extérieur (3) d'un raccord d'air extérieur (2) à un clapet d'air entrant (6) d'un raccord d'air entrant (5), et une unité d'air extrait amène un flux d'air d'un clapet d'air extrait (8) d'un raccord d'air extrait (7) à un clapet d'air sortant (11) d'un raccord d'air sortant (10), **caractérisé en ce qu'**en mode de nettoyage, le clapet d'air extérieur (3), le clapet d'air entrant (6), le clapet d'air extrait (8) et le clapet d'air sortant (11) sont fermés et l'ouverture de clapets d'air de circulation (14, 15) disposés à l'intérieur de l'appareil de ventilation met l'unité d'air entrant en communication avec l'unité d'air extrait de deux côtés, le nettoyage et la désinfection de l'air ainsi mis en circulation à l'intérieur de l'appareil de ventilation étant alors réalisés à l'aide d'un module d'ozonation (16).

6. Procédé selon la revendication 5, **caractérisé en ce qu'**il est prévu un mode de rinçage dans lequel, alors que le module d'ozonation (16) est arrêté, le clapet d'air extérieur (2) et le clapet d'air sortant (11) sont ouverts et le clapet d'air de circulation (14) est ouvert pour faire communiquer l'unité d'air entrant avec l'unité d'air extrait de façon à créer un trajet de rinçage d'un seul côté.
